# EUROPEAN PATENT APPLICATION

(11) **EP 4 746 396 A1**
(43) Date of publication of application: **20.05.2026**
(21) Application number: 25213085.1
(22) Date of filing: 03.11.2025
(51) Int. Cl.: H04N 1/00

(54) **DOCUMENT READING DEVICE**

(30) Priority: 15.11.2024 JP 2024199772
(71) Applicant: KYOCERA Document Solutions Inc., Osaka-shi, Osaka 540-8585 (JP)
(72) Inventor: LE, Thanh Cong, Osaka-shi, Osaka, 540-8585 (JP)
(74) Representative: Viering, Jentschura & Partner mbB Patent- und Rechtsanwälte

(57) **Abstract**

A document reading device (10) according to an embodiment of the present disclosure includes a pick-up roller (45), a sensor (143), an operation section (115), and a sheet feeding controller (130). The pick-up roller (45) draws out a plurality of sheets one by one from a sheet table (11) on which the plurality of sheets are loaded. The sensor detects presence or absence of the sheet. The operation section (115) receives an operation of a user. The sheet feeding controller (130) controls drive to raise the pick-up roller (45) on the basis of a detection result of the sensor and an operation instruction from the operation section (115).

## Description

### Incorporation by Reference

This application claims the benefit of Japanese Priority Patent Application JP 2024-199772 filed November 15, 2024, under 35 U.S.C. 119, the entire contents of which are incorporated herein by reference.

### Field

The present disclosure relates to a document reading device that is applicable to a paper jam in an image forming apparatus or the like that can perform printing or scanning.

### Background

Conventionally, a sheet-through image reading apparatus is configured to feed documents one by one by a pick-up roller caused to come into contact with an upper surface of each document placed on a document tray, convey the documents, and read images of the documents.

For example, Japanese Patent Application Laid-open No. 2023-73141 discloses a document transport apparatus that raises a pick-up roller to a standby position when a document detection sensor also serving as a descent detection sensor detects the descent of the pickup roller. In addition, Japanese Patent Application Laid-open No. 2010-58884 discloses a paper feeder in which when a document is not placed on a document placing table, a pickup roller is lowered and then lifted by a predetermined distance to be positioned at an initial position, and when a document is placed on the document placing table, the pickup roller is lifted by a predetermined quantity.

### Summary

According to an embodiment of the present disclosure, there is provided a document reading device including a pick-up roller, a sensor, an operation section, and a sheet feeding controller.

The pick-up roller draws out a plurality of sheets one by one from a sheet table on which the plurality of sheets are loaded.

The sensor detects presence or absence of the sheet.

The operation section receives an operation of a user.

The sheet feeding controller controls drive to raise the pick-up roller on the basis of a detection result of the sensor and an operation instruction from the operation section.

These and other objects, features and advantages of the present disclosure will become more apparent in light of the following detailed description of best mode embodiments thereof, as illustrated in the accompanying drawings.

### Brief Description of Figures

Fig. 1 is a view showing an outer appearance of an image forming apparatus;
Fig. 2 is a cross-sectional view showing a configuration of a scanner unit;
Fig. 3 is a perspective view showing a sheet feeding section;
Fig. 4 is a cross-sectional view showing a configuration of the scanner unit;
Fig. 5 is a timing chart when there is no document in a DP after jam processing;
Fig. 6 is a timing chart when there is a document in the DP after jam processing;
Figs. 7A and 7B are schematic views showing two states;
Fig. 8 is a block diagram showing a configuration of the image forming apparatus;
Fig. 9 is a flowchart showing control processing for a jam by a sheet feeding controller; and
Fig. 10 is a flowchart showing control processing for a jam when there is a document in the DP.

### Detailed Description

Hereinafter, an embodiment of the present disclosure will be described with reference to the drawings.

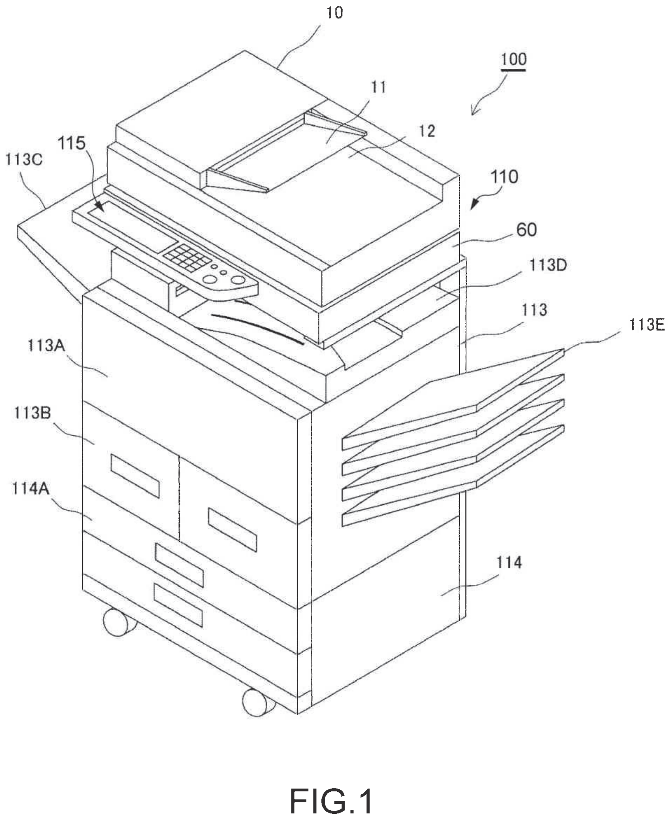

Fig. 1 is a view showing an outer appearance of an image forming apparatus 100.

The image forming apparatus 100 can selectively perform various modes such as copying, facsimile, scanner, and printer. For example, copying includes printing an image read from a document onto a recording sheet. In addition, for example, facsimile includes transmitting an image read from a document over a public network and printing the received image onto a recording sheet. Further, for example, scanner includes outputting an image read from a document to an external information terminal. In addition, for example, printer includes printing an image input from outside via a network or the like onto a recording sheet.

In Fig. 1, the image forming apparatus 100 includes a scanner unit 110, an image forming unit 113, and a sheet feeding unit 114.

The scanner unit 110 can read an image of a document. The scanner unit 110 includes a document reader 10 and an image reader 60. For example, the scanner unit 110 may be configured to be capable of reading an image of a document by using both a sheet-through method in which a document is moved to be read with a document reading element (scanner head) being kept stationary, and a scanner head method in which a document reading element is moved to read an image of a document from below the document placed on a platen glass.

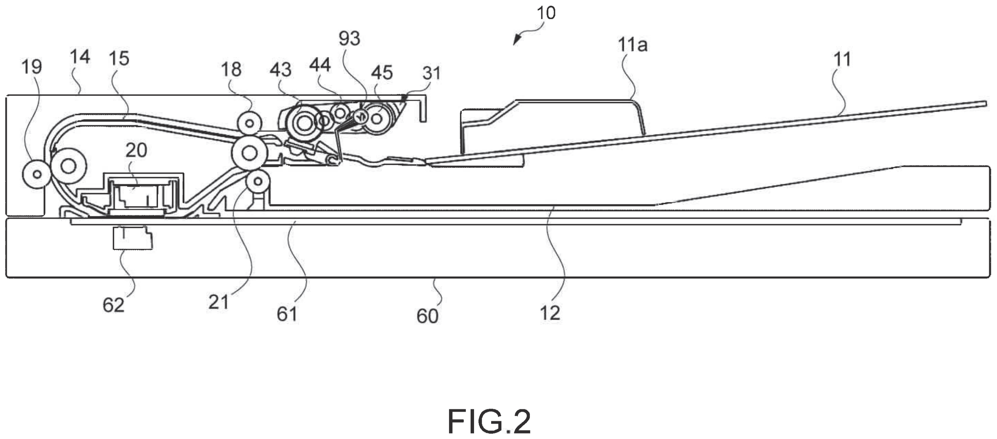

The document reader (DP) 10 is an auto document feeder (ADF) and includes a document placing table 11 and a document discharge table 12. The document reader 10 reads a document placed on the document placing table 11 and discharges the document to the document discharge table 12. The specific structure of the document reader 10 will be described with reference to Fig. 2. Note that in this embodiment the document reader 10 corresponds to a document reading device.

The image reader 60, above which the document reader 10 is provided, reads an image of the document placed on a platen glass 61 (see Fig. 2) to obtain image data. For example, the image reader 60 may be provided with a first document reading element 62 (see Fig. 2) that reads a front surface of a document, and the document reader 10 may be provided with a second document reading element 20 (see Fig. 2) that reads a back surface of the document, thus reading both sides of the document by passing the document therethrough one time. Note that a contact image sensor (CIS) and the like may be used for the first document reading element 62 and the second document reading element 20.

The image forming unit 113 includes an image forming section 113A, a sheet feeding cassette 113B, a manual feeding tray 113C, a sheet discharge tray 113D, and a sorter 113E. In addition, the sheet feeding unit 114 includes a sheet feeding cassette 114A. The image forming unit 113 forms an image, in the image forming section 113A, on a recording sheet fed from the sheet feeding cassette 113B, the manual feeding tray 113C, or the sheet feeding cassette 114A and discharges the recording sheet to the sheet discharge tray 113D or the sorter 113E.

Fig. 2 is a cross-sectional view showing a configuration of the scanner unit 110.

The document reader 10 includes the document placing table 11 and a lateral guide plate 11a, and a document bundle (not shown) is placed on the document placing table 11. The placed document bundle is aligned by the lateral guide plate 11a such that the center of the documents in the width direction is substantially matched with the center of the conveyance path in the width direction of the document reader 10.

In addition, the document reader 10 includes a document set sensor 143 that detects the presence or absence of a document. In this embodiment, the document set sensor 143 detects the presence or absence of a document in the DP and outputs the detection result to the sheet feeding controller 130 to be described later. For example, the document set sensor 143 detects a document located in the vicinity of the document placing table 11 or a stopper 93 or in the vicinity of (e.g., immediately below) the pick-up roller 45. Note that a configuration or installation location of the document set sensor 143 is not limited, and any detection method using light, weight, or the like may be used to detect a document.

A DP cover 14 is disposed above the upper surface of a conveyance path 15 that conveys a document, the conveyance path 15 including the sheet feeding section 31, and covers them in an openable and closable manner. For example, the DP cover 14 is opened and closed by a user to resolve a paper jam or other problems. In this embodiment, no sensor is provided to detect the opened/closed state of the DP cover 14.

The document reader 10 also includes the sheet feeding section 31, a first conveyance roller 18, a second conveyance roller 19, the second document reading element 20, and a sheet discharge roller 21. In addition, the sheet feeding section 31, the first conveyance roller 18, the second conveyance roller 19, the second document reading element 20, and the sheet discharge roller 21 are provided sequentially from the upstream side of a conveyance direction.

In the document bundle placed on the document placing table 11, the topmost document of the document bundle is sent from a sheet feeding port to the conveyance path 15 by the sheet feeding section 31, and the sent document is conveyed by the first conveyance roller 18 and the second conveyance roller 19. In addition, images of both sides of the sent document are read by the first document reading element 62 and the second document reading element 20. The document is then discharged from a discharge port by the sheet discharge roller 21 and stacked onto the document discharge table 12.

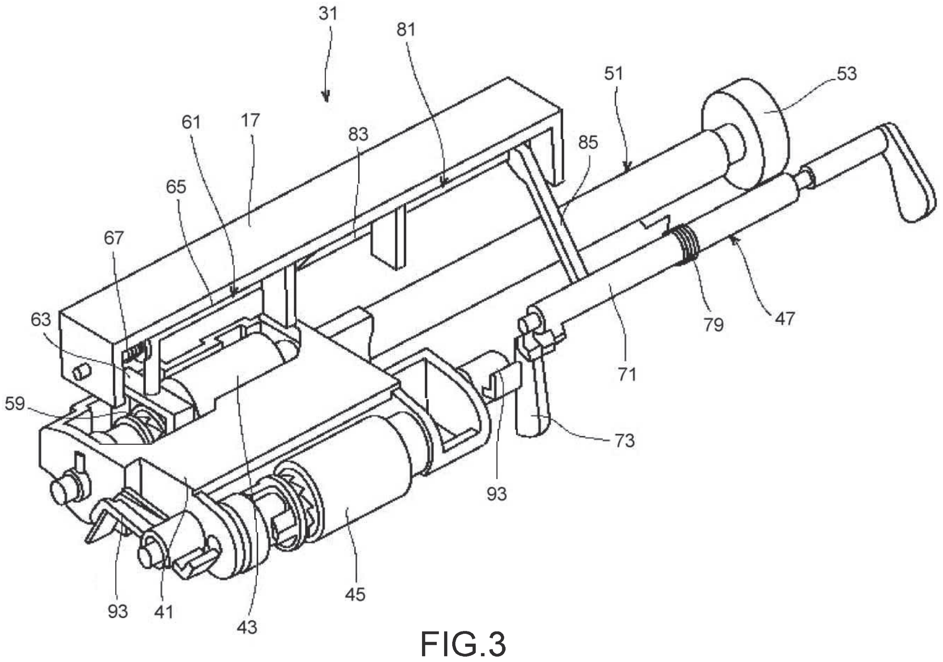

Fig. 3 is a perspective view showing the sheet feeding section 31.

As shown in Figs. 2 and 3, the sheet feeding section 31 includes a sheet feeding roller 43 and a pick-up roller 45 that are supported by a sheet feeding holder 41 to feed documents from the document bundle, and an actuator 47 driven by the document bundle.

The sheet feeding holder 41 is a rectangular parallelepiped box-shaped member with an opening in the lower surface and includes a pair of side plates and a top plate. The sheet feeding holder 41 is pivotally supported by the free end of a rotation shaft 51, which is supported by a rear side plate of the conveyance path in a cantilever manner. In addition, a drive gear 53 is fixed to the fixed end of the rotation shaft 51, which is the end opposite to the free end. The drive gear 53 is connected to an output gear of a motor (not shown) via a gear row (not shown), and the motor is configured to be rotatable in both directions.

In addition, the sheet feeding holder 41 pivots about the rotation shaft 51 in the up-and-down direction, with the free end of the rotation shaft 51 passing through the downstream ends, in the conveyance direction, of the pair of side plates of the sheet feeding holder 41. A torque limiter (not shown) is provided between one of the side plates of the sheet feeding holder 41 and the rotation shaft 51. When the torque applied to the sheet feeding holder 41 is equal to or smaller than a threshold, the torque limiter causes the sheet feeding holder 41 to pivot together with the rotation shaft 51. On the other hand, when the torque applied to the sheet feeding holder 41 reaches the threshold, the torque limiter causes the rotation shaft 51 to spin out with respect to the sheet feeding holder 41.

The sheet feeding roller 43 is rotatably supported by the free end of the rotation shaft 51 at a location between the pair of side plates of the sheet feeding holder 41. The sheet feeding roller 43 and the rotation shaft 51 are coupled by a coupling mechanism, and the rotational force of the rotation shaft 51 is transmitted to the sheet feeding roller 43. Note that the coupling mechanism of the sheet feeding roller 43 and the rotation shaft 51 is not limited, and any coupling mechanism may be configured by combining various configurations such as a slider 59, a coupling (not shown), and a transmission gear (not shown).

The slider 59 is supported by an operation lever 61. The operation lever 61 includes a frame 63 that rotatably supports the slider 59, and a rod 65 that supports the frame 63. The rod 65 is supported by a support member 17 so as to be movable in an axial direction and not to be rotatable. The rod 65 is biased backward by a coil spring 67.

The actuator 47 is a member that is driven (rotated) by the document bundle placed on the document placing table 11. For example, the actuator 47 includes a rod 71 and an actuator arm 73 or a link arm (not shown) protruding radially from the rod 71.

In addition, the actuator 47 is disposed on the rear side of the sheet feeding holder 41. The actuator 47 includes a torsion coil spring 79 provided to the rod 71, which causes the actuator arm 73 to hang down below the sheet feeding holder 41. In the initial posture of the actuator 47 (in the state shown in Fig. 2 where the pick-up roller 45 is not lowered), the actuator arm 73 is pushed by the document bundle, and thus the rod 71 rotates against a biasing force of the torsion coil spring 79. In addition, if there is no document bundle, the rod 71 is biased by the torsion coil spring 79, and thus the actuator 47 takes the initial posture.

A link lever 81 is disposed between the actuator 47 and the operation lever 61. The link lever 81 converts a rotating motion of the actuator 47 into a reciprocating motion of the operation lever 61 along the axial direction.

In addition, the link lever 81 is disposed downstream of the actuator 47 in the conveyance direction and includes a rod 83 and a link arm 85 that protrudes radially from a rear end of the rod 83. The rod 83 of the link lever 81 is supported by the support member 17 so as to be rotatable and not to be movable in the axial direction at a posture aligned with the rod 65 of the operation lever 61 in the axial direction.

The pick-up roller 45 is disposed between the upstream ends, in the conveyance direction, of the pair of side plates of the sheet feeding holder 41. The rotation shaft of the pick-up roller 45 is rotatably supported by the pair of side plates. A transmission gear (not shown) that meshes with the transmission gear (not shown) of the rotation shaft 51 via a plurality of idle gears 44 (see Fig. 1) is fixed to the rotation shaft.

In addition, the sheet feeding holder 41 is also supported by a pair of stoppers 93 that restricts the tip position of the document bundle. The stoppers 93 are rotatably supported on the outer surfaces of the pair of side plates. In addition, the tips of the stoppers 93 hang down below the lower end of the sheet feeding holder 41. The pair of stoppers 93 is capable of pivoting with respect to the sheet feeding holder 41 when the sheet feeding holder 41 pivots to a sheet feeding posture, thus allowing the documents to be sent. In addition, the pair of stoppers 93 is incapable of pivoting with respect to the sheet feeding holder 41 when the sheet feeding holder 41 pivots to a non-sheet feeding posture, thus restricting the tip position of the document bundle.

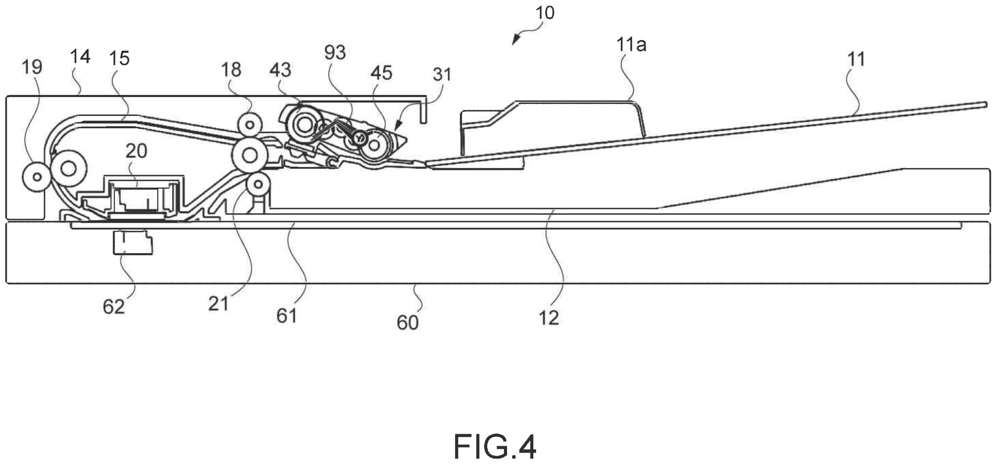

Here, if the DP cover 14 is closed after the document is removed when a paper jam occurs, the pick-up roller 45 (sheet feeding section 31) is lowered (see Fig. 4). If sheets are fed in this state, a jam occurs and the number of sheets that can be fed is reduced. For example, as shown in Fig. 2, there is no problem if the pick-up roller 45 is raised. However, if the pick-up roller 45 is lowered (in the state where the pick-up roller 45 (actuator 47) is visible when viewed through the sheet feeding port) as shown in Fig. 4, the above problems occur.

Hereinafter, the state where the pick-up roller 45 is lowered will be described as an NG state. In addition, the state where the pick-up roller 45 is raised (initial posture) as shown in Fig. 2 will be described as an OK state.

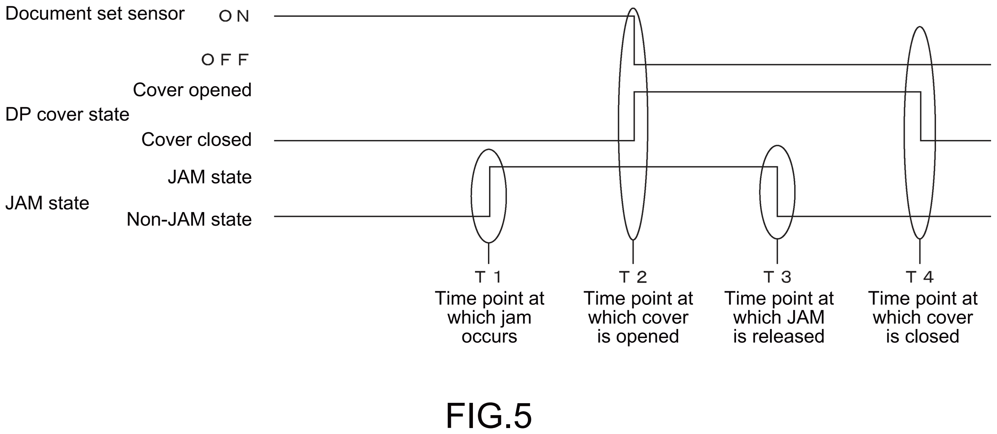

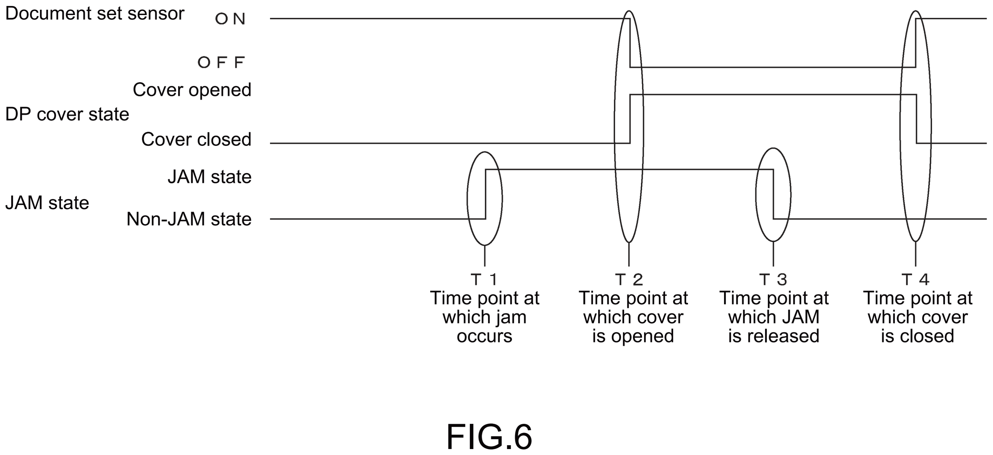

Here, a timing chart of the NG state, i.e., of jam processing when a jam occurs will be described with reference to Figs. 5 and 6.

Fig. 5 is a timing chart when there is no document in the DP after jam processing.

As shown in Fig. 5, at the time point at which a jam occurs (timing T1), the document set sensor 143 is in the ON state (the state where a document is placed), and the DP cover 14 is closed.

In addition, at the time point at which the user opens the DP cover 14 (timing T2), the document set sensor 143 enters the OFF state, and since the DP cover 14 is opened, the state of the DP cover 14 is changed to a cover opened state.

In addition, at the time point at which the user releases the jam (timing T3), the state of the jam is changed to a non-jam state. Since the cover is still opened at this timing, the state of the DP cover 14 does not change.

In addition, at the time point at which the user closes the DP cover 14 (timing T4), the state of the DP cover 14 is changed to a cover closed state. In Fig. 5, there is no document in the DP, and thus the document set sensor 143 is in the OFF state.

Fig. 6 is a timing chart when there is a document in the DP after jam processing.

As shown in Fig. 6, at the time point at which a jam occurs (timing T1), the document set sensor 143 is in the ON state (the state where a document is placed), and the DP cover 14 is closed.

In addition, at the time point at which the user opens the DP cover 14 (timing T2), the state of the DP cover 14 is changed to the cover opened state, and the document set sensor 143 enters the OFF state. In this case, since the sheet feeding section 31 is disposed in the DP cover 14, the user opens the DP cover 14 to process a paper jam, and thus the document set sensor 143 determines that no document is left (OFF).

In addition, at the time point at which the user releases the jam (timing T3), the state of the jam is changed to a non-jam state. Since the cover is still opened at this timing, the state of the DP cover 14 does not change.

In addition, at the time point at which the user closes the DP cover 14 (timing T4), the state of the DP cover 14 is changed to the cover closed state. In Fig. 6, there is a document in the DP, and thus the document set sensor 143 enters the ON state.

Here, if there is a document in the DP, the NG state is classified into two states. In this embodiment, the NG state is classified into a first state and a second state depending on the position of the document in the DP. The first state is a state where the stopper 93 returns to a correct position (initial posture) by controlling the pick-up roller 45. The second state is a state where the stopper 93 does not return to a correct position even if the pick-up roller 45 is controlled.

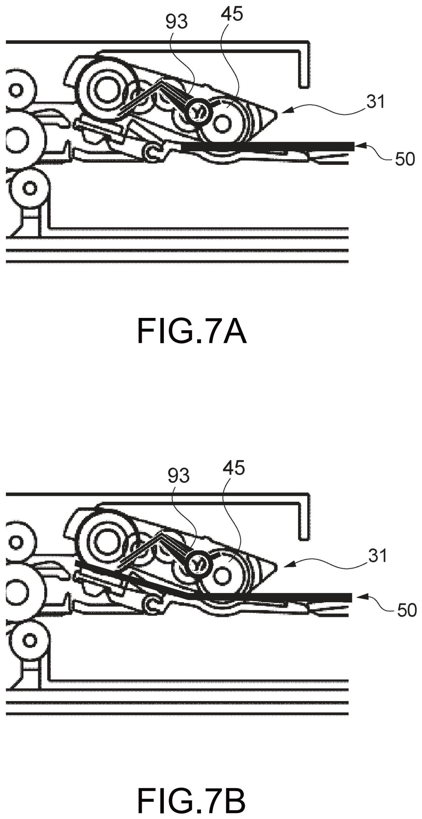

Figs. 7A and 7B are schematic views respectively showing the two states. Fig. 7A is a schematic view showing the first state. Fig. 7B is a schematic view showing the second state.

As shown in Fig. 7A, if the tip of a document 50 (the downstream end in the conveyance direction) is nipped by the pick-up roller 45, this state can be classified as the first state. In other words, if the tip of the document 50 is located on the near side relative to the stopper 93, this state can be classified as the first state. In addition, as shown in Fig. 7B, if the tip of the document 50 is located on the far side relative to the stopper 93 (the downstream side in the conveyance direction), this state can be classified as the second state.

In this embodiment, the document reader 10 includes the sheet feeding controller 130 that controls the stopper 93 to return to a correct position in the second state.

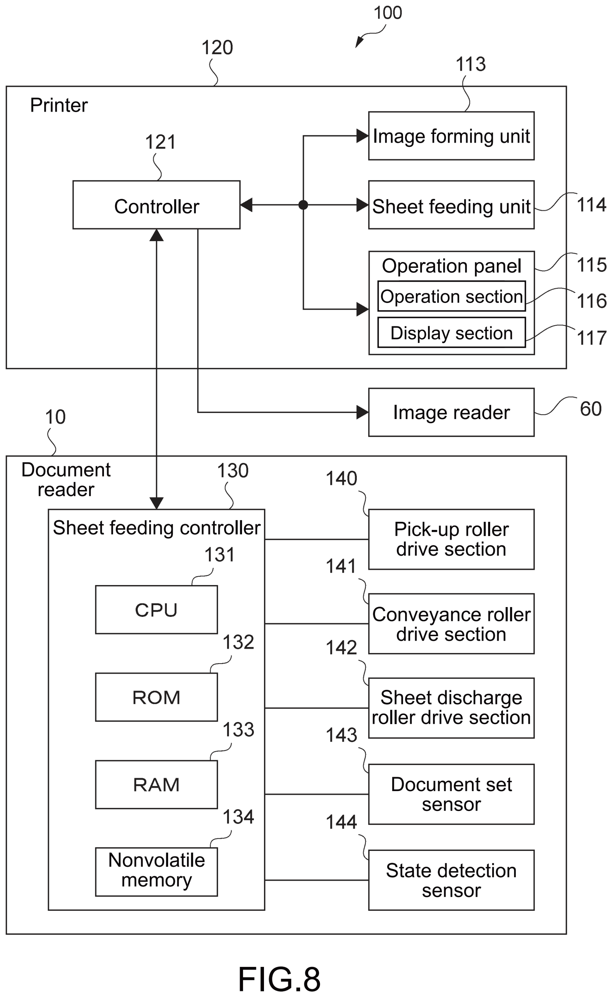

Fig. 8 is a block diagram showing a configuration of the image forming apparatus 100. Note that in Fig. 8 a block including the image forming unit 113 and the sheet feeding unit 114 will be described as a printer 120.

As shown in Fig. 8, the image forming apparatus 100 includes the printer 120 and the document reader 10. The printer 120 includes the image forming unit 113, the sheet feeding unit 114, an operation panel 115, and a controller 121. The operation panel 115 includes an operation section 116 that is capable of receiving an operation of a user, and a display section 117 that displays various settings and statuses of the image forming apparatus 100. For example, the operation section 116 includes a numeric keypad with which the number of prints can be input, an OK button that indicates an approval of the user, and the like. In addition, for example, the display section 117 may use an LE display. In addition to this, the operation panel 115 may include a speaker or the like for informing the user of an abnormal state of the image forming apparatus 100, such as a jam.

The controller 121 communicates with the document reader 10, controls an image reading operation of the image reader 60 according to the timing at which the document is conveyed, and controls the image forming unit 113 and the sheet feeding unit 114 on the basis of the image data acquired by the reading operation, to thereby perform image forming processing.

The document reader 10 includes the sheet feeding controller 130, a pick-up roller drive section 140, a conveyance roller drive section 141, a sheet discharge roller drive section 142, the document set sensor 143, and a state detection sensor 144.

The sheet feeding controller 130 includes a central processing unit (CPU) 131, a read only memory (ROM) 132, a random access memory (RAM) 133, and a nonvolatile memory 134. In this embodiment, the sheet feeding controller 130 performs processing of controlling the up-and-down movement (including return to the initial posture) of the pick-up roller 45.

The CPU 131 executes a control program stored in the ROM 132 to receive detection signals from the document set sensor 143 and various job execution instructions from the operation panel 115 by the user via the controller 121 of the printer 120, and controls the pick-up roller drive section 140, the conveyance roller drive section 141, and the sheet discharge roller drive section 142.

The ROM 132 stores a control program and the like for executing the operation of conveying documents. The RAM 133 is a nonvolatile memory and is a work area for the CPU 131 to perform programs. For example, an electrically erasable programmable read-only memory (EEPROM) is used for the nonvolatile memory 134, which is a data saving area for the CPU 131.

The state detection sensor 144 detects whether the pick-up roller 45 is in the OK state or the NG state. The state detection sensor 144 outputs, to the sheet feeding controller 130, a detection result indicating that the pick-up roller 45 is in the OK state or the NG state.

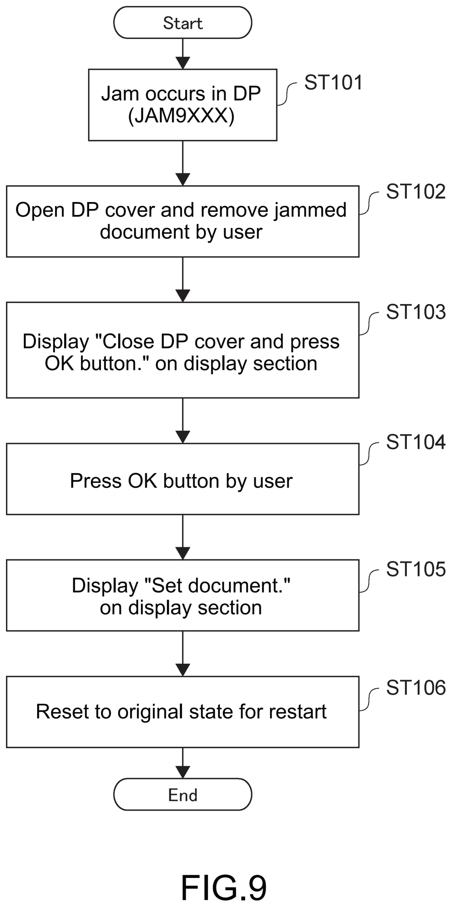

Fig. 9 is a flowchart showing the control processing for a jam by the sheet feeding controller 130. Fig. 9 shows a flowchart showing the control processing in the OK state shown in Fig. 2.

As shown in Fig. 9, when a jam occurs in the DP (Step 101), the user opens the DP cover 14 and removes the jammed document (Step 102). In this case, the sheet feeding controller 130 may display a jam code "JAM9XXX", which indicates that a jam has occurred, on the display section 117 of the operation panel 115, to notify the user of the occurrence of a jam.

When the user eliminates the jam (removes the jammed sheet), the sheet feeding controller 130 notifies the user of an instruction to be performed next via the display section 117 of the operation panel 115 (Step 103). For example, in Step 103, the sentence "Close the DP cover 14 and press the OK button." is displayed on the display section 117.

If the user closes the DP cover 14 and presses the OK button that is the operation section 116 (Step 104), the sheet feeding controller 130 notifies the user of an instruction to be performed next via the display section 117 of the operation panel 115 (Step 105). For example, in Step 105, the sentence "Set a document." is displayed on the display section 117. The user puts a document on the document placing table 11 according to this sentence.

Through Step 101 to Step 105, the jam is released, and thus the operation of printing or scanning can be restarted again. The sheet feeding controller 130 resets the state to a state before the jam occurs (a normal state before an abnormality occurs) for restart (Step 106).

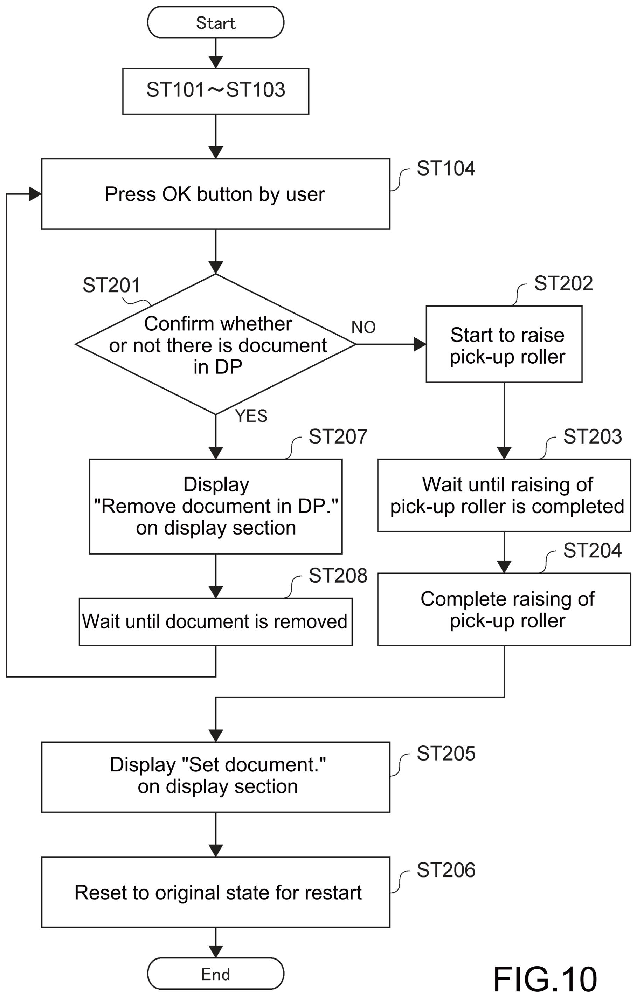

Fig. 10 is a flowchart showing the control processing for a jam when there is a document in the DP. Fig. 10 shows a flowchart showing the control processing in the NG state shown in Figs. 4, 7A, and 7B. Note that Fig. 10 omits the control processing from Step 101 to Step 103, which are common to those shown in Fig. 9.

In this embodiment, since the document reader 10 includes the state detection sensor 144 that detects whether the pick-up roller 45 is in the OK state or the NG state, if the detection result by the state detection sensor 144 is supplied to the sheet feeding controller 130, the sheet feeding controller 130 performs either of the processing in the flowchart shown in Fig. 9 or the processing in the flowchart shown in Fig. 10.

As shown in Fig. 10, when the user presses the OK button (Step 104), the document set sensor 143 determines whether or not there is a document in the DP (Step 201).

If it is detected that there is no document in the DP (NO in Step 201), the sheet feeding controller 130 starts raising the pick-up roller 45 and waits until the pick-up roller is raised to the initial posture (Step 202, Step 203).

If the pick-up roller 45 returns to the initial posture and completes the raising by the sheet feeding controller 130 (Step 204), the sheet feeding controller 130 notifies the user of an instruction to be performed next via the display section 117 of the operation panel 115 (Step 205). For example, in Step 205, the sentence "Set a document." is displayed on the display section 117. The user puts a document on the document placing table 11 according to this sentence.

The jam is released, and thus the operation of printing or scanning can be restarted again. The sheet feeding controller 130 resets the state to a state before the jam occurs (a normal state before an abnormality occurs) for restart (Step 206).

If there is a document in the DP (YES in Step 201), the sheet feeding controller 130 notifies the user of an instruction to be performed next via the display section 117 of the operation panel 115 (Step 207). For example, in Step 207, the sentence "Remove the document in the DP." is displayed on the display section 117. In addition, when the document is removed (Step 208), the processing returns to Step 104, and the user press the OK button. Thus, since the sheet is removed from the DP, the processing in Steps 201 to 206 are performed. In addition, since the state detection sensor 144 selects the flowchart shown in Fig. 9 or Fig. 10, it is unnecessary to constantly activate the document set sensor 143. In other words, the document set sensor 143 is not activated unless the second state occurs, thereby reducing costs of electricity and others.

As described above, the document reader 10 according to this embodiment includes the pick-up roller 45 that draws out a plurality of sheets one by one from the document placing table 11 on which the plurality of sheets are loaded; the document set sensor 143 that detects the presence or absence of the sheet; the operation panel 115 that receives an operation of a user; and the sheet feeding controller 130 that controls drive to raise the pick-up roller 45 on the basis of a detection result of the document set sensor 143 and an operation instruction from the operation panel 115. This makes it possible to reduce costs by not installing a sensor that detects the opened/closed state of the cover, and to perform suitable control when a paper jam occurs.

In conventional sheet feeding devices, which have achieved a reduction in thickness and weight without using a sensor that detects the opening and closing of the cover, a sheet feeding section is designed to be located on a cover, and thus the cover must be opened to open and close the DP when a jam occurs. Since an actuator is disposed on the DP cover, when the user opens the cover to process a paper jam, a sensor that detects the presence or absence of a document detects that no document is left. In other words, it has been impossible to detect whether or not the cover is closed after a paper jam is released. Further, when a paper jam occurs, the document is removed, and when the cover is closed, the sheet feeding unit is lowered. When sheets are fed in that state, there arise problems such as a jam and a reduction in the number of sheets that can be fed.

In the present technology, the pick-up roller is controlled to be raised only when no document is detected on the basis of the operations from a sensor that detects the presence or absence of a document and the operation panel. This makes it possible to reduce costs without installing a sensor that detects the opened/closed state of the cover, and to perform suitable control when a paper jam occurs. In addition, it is possible to determine the quantity of sheets as designed, without reducing the number of sheets that can be fed, which are to be set in the DP.

It should be understood by those skilled in the art that various modifications, combinations, subcombinations and alterations may occur depending on design requirements and other factors insofar as they are within the scope of the appended claims or the equivalents thereof.

## Claims

1. A document reading device (10), comprising:
a pick-up roller (45) that draws out a plurality of sheets one by one from a sheet table (11) on which the plurality of sheets are loaded;
a sensor (143) that detects presence or absence of the sheet;
an operation section (115) that receives an operation of a user; and
a sheet feeding controller (130) that controls drive to raise the pick-up roller (45) on a basis of a detection result of the sensor (143) and an operation instruction from the operation section (115).

2. The document reading device (10) according to claim 1, wherein
the operation instruction includes an instruction indicating that the sheet jammed in the document reading device (10) has been removed, and
the sheet feeding controller (130) controls the drive to raise the pick-up roller (45) on a basis of a detection result indicating that there is no sheet, which is detected by the sensor (143), and the operation instruction.

3. The document reading device (10) according to claim 1 or 2, further comprising
a state detection sensor (144) that detects a first state that is a state related to a position of the pick-up roller (45), or a second state different from the first state, wherein
the sheet feeding controller (130) controls the drive to raise the pick-up roller (45) on a basis of a detection result from the state detection sensor (144).
